(19) Europäisches Patentamt

European Patent Office

Office européen des brevets

(11) **EP 1 611 990 A1**

(12) **EUROPEAN PATENT APPLICATION**

(43) Date of publication:
04.01.2006 Bulletin 2006/01

(51) Int Cl.:
*B23K 35/04* *(2006.01)*    *B23K 35/40* *(2006.01)*

(21) Application number: 04023956.8

(22) Date of filing: 07.10.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: 30.06.2004 KR 2004050031

(71) Applicant: **Kiswel Ltd.
Sasang-gu,
Busan 617-843 (KR)**

(72) Inventors:
• **Kim, Yong-chul
Kyoungnam (KR)**
• **Lee, Jae-Hyoung
Kyoungnam (KR)**

• **Bang, Hwan-cheol
Kyoungnam (KR)**

(74) Representative: **Beck, Michael Rudolf et al
Beck & Rössig
European Patent Attorneys
Cuvilliésstrasse 14
81679 München (DE)**

Remarks:
A request for correction in the specification
documents has been filed pursuant to Rule 88 EPC.
A decision on the request will be taken during the
proceedings before the Examining Division
(Guidelines for Examination in the EPO, A-V, 3.).

(54) **Surface treatment agent for welding wire and welding wire surface-treated with the same**

(57)    Disclosed herein is a surface treatment oil for treating the surface of a welding wire. The surface treatment oil comprises at least one alkali metal compound and/or an alkaline earth metal compound, a Zn compound, and a hydrocarbon compound wherein the hydrocarbon compound contains at least two functional groups selected from the group consisting of ester, carboxylic acid, alkane and sulfonic acid groups. Further disclosed is a welding wire surface treated with the surface treatment oil. The surface treatment oil can provide good rust resistance, wear resistance, arc stability and wire feedability to a welding wire when being applied to the surface of the welding wire.

**Description**

BACKGROUND OF THE INVENTION

Field of the Invention

The present invention relates to a surface treatment agent for a welding wire, and a welding wire surface-treated with the agent. More particularly, the present invention relates to a surface treatment agent which can provide good rust resistance, wear resistance, arc stability and wire feedability to a welding wire when being applied to the surface of the welding wire, and a welding wire surface treated with the surface treatment agent.

Description of the Related Art

As welding processes have recently become automated, the application range of gas metal arc welding wires is being increasingly extended in many industrial fields, particularly, steel frames, automobiles, shipbuilding and construction. Welding wires which are currently consumed in large quantities are commonly surface plated with copper in order to ensure good electric conductivity, wire feedability and rust resistance.

However, the formation of a uniform plating layer on a wire is essential for better electric conductivity, wire feedability and rust resistance of the wire. When the thickness of the plating layer is not constant, fine copper (Cu) particles fall off from the wire surface by the friction between the plated wire and a welding tip upon actual welding, and accumulate inside the tip, causing several problems, e.g., severe clogging of the tip, decreased welding stability and generation of more spatters. Further, the non-uniform plating layer may deteriorate the rust resistance of the wire, leading to rust formation.

On the other hand, in the case of a non-plated(Cu-free) wire whose surface is bare, a technique for stably treating the wire surface is required to ensure electric conductivity, wire feedability and rust resistance of the wire. Since the steel base of the non-plated(Cu-free) wire is completely exposed to environmental conditions, deterioration at the surface portion is inherently involved and rust formation may be unavoidable depending on conditions of use. Consequently, this surface deterioration causes many problems associated with electric conductivity, wire feedability and rust resistance, etc.

To overcome these problems of copper-plated and copper-free(non-plated) wires, research on wire surface and development of surface treatment agents are urgently needed.

Further, many surface treatment agents for welding wires have been developed to date. In the case of Cu-plated wires, e.g., Japanese Patent Laid-open No. Hei 9-141491 discloses a technique for improving wire feedability and arc stability by suspending polytetrafluoroethylene in water or alcohol and applying the suspension to a plated wire.

Many techniques using surface treatment agents for non-plated(Cu-free) wires are known, for example: Japanese Patent Laid-open No. Hei 11-147174 discloses a technique for improving wire feedability by sticking $MoS_2$ to the surface to a non-plated wire; Japanese Patent Laid-open No. 2000-94178 discloses a technique for obtaining excellent wire feedability by applying a material containing one species selected from $MoS_2$, $WS_2$ and C to the ground surface of a non-plated wire; Japanese Patent Laid-open No. 2000-117483 discloses a technique for obtaining excellent arc starting property by applying a material containing one species selected from $MoS_2$, $WS_2$ and C to the ground surface of a non-plated wire; Japanese Patent Laid-open No. 2003-39191 discloses a technique for improving weldability, electric conductivity and rust resistance by forming an oxide scale on the surface of a non-plated wire and applying a material containing at least one species selected from $MoS_2$, $WS_2$ and graphite to the wire surface; Japanese Patent Laid-open No. 2004-1061 discloses a technique for reducing generation of spatter by applying a material containing a potassium compound, a sulfide and polyisobutene to the surface of a non-plated wire.

On the other hand, many techniques using surface treatment agents for general welding wires are known, for example: Japanese Patent Laid-open No. Sho 58-393 discloses a technique for improving wire feedability and rust resistance by compounding one or two species selected from graphite and $MoS_2$, and a fluororesin; Japanese Patent Laid-open No. Hei 5-329683 discloses a technique for improving wire feedability by using polytetrafluoroethylene; Japanese Patent Laid-open No. Hei 7-97583 discloses a technique for improving weldability by using a mixed oil consisting of hydrocarbon-based mineral oil and the balance of a plant oil; Japanese Patent Laid-open No. Hei 8-257788 discloses a technique for improving wire feedability and arc stability by using one or two species selected from $MoS_2$, $WS_2$ and polytetrafluoroethylene, a fatty acid and a metal soap; Japanese Patent Laid-open No. 2001-252786 discloses a technique for improving wire feedability by using at least one species selected from $MoS_2$, $WS_2$ and C, and at least one species selected from plant oils, animal oils and mineral oils; Japanese Patent Laid-open No. 2002-239779 discloses a technique for improving wire feedability and arc stability by using one species selected from $MoS_2$ and $WS_2$, polytetrafluoroethylene and a metal soap; Japanese Patent Laid-open No. Sho 55-40068 discloses a technique for improving wire feedability and corrosion resistance by using one or two species selected from ester-based lubricants consisting of higher fatty acids and higher monohydric alcohols; and Japanese Patent Laid-open No. Hei 8-290287 discloses a technique for improving wire feedability and arc stability by applying a phosphate-based lubricant containing K and Na to a welding wire.

Primary functions of the above-mentioned conventional inorganic surface treatment agents include improving wire feedability by leaving the surface treatment agent in a lubricant present on the wire surface, and improving wire feedability or corrosion resistance by applying a liquid lubricant to the wire surface.

## SUMMARY OF THE INVENTION

Therefore, the present invention has been made in view of the above problems, and it is an object of the present invention to provide a surface treatment agent in the form of an oil consisting of metal compounds and a hydrocarbon compound which can form a stable coating film on the surface of a wire without the use of a lubricant.

It is another object of the present invention to provide a Cu-plated or non-plated(Cu-free) welding wire surface treated with a surface treatment agent capable of forming a stable coating film on the surface of the wire in order to impart improved rust resistance, wear resistance, arc stability and wire feedability to the wire.

It is yet another object of the present invention to provide a flux-cored welding wire surface treated with a surface treatment agent capable of forming a stable coating film on the surface of the wire in order to improve rust resistance, wear resistance, blowhole preventive property and wire feedability to the wire.

In accordance with a first aspect of the present invention, there is provided a surface treatment oil for treating the surface of a welding wire, comprising: at least one alkali metal compound and/or an alkaline earth metal compound; a Zn compound; and a hydrocarbon compound wherein the hydrocarbon compound contains at least two functional groups selected from the group consisting of ester, carboxylic acid, alkane and sulfonic acid groups.

In accordance with a second aspect of the present invention, there is provided a non-plated(Cu-free) welding wire surface treated with the surface treatment oil wherein the surface treatment oil is applied to the wire so as to be present in an amount of 0.03~0.60g per kg of wire.

In accordance with a third aspect of the present invention, there is provided a Cu-plated welding wire surface treated with the surface treatment oil wherein the surface treatment oil is applied to the wire so as to be present in an amount of 0.03~0.60g per kg of wire.

In accordance with a fourth aspect of the present invention, there is provided a flux-cored welding wire surface treated with the surface treatment oil wherein the surface treatment oil is applied to the wire so as to be present in an amount of 0.01~1.00g per kg of wire.

## DESCRIPTION OF THE PREFERRED EMBODIMENTS

The present invention will now be described in detail

First, functions of each component constituting the surface treatment oil according to the present invention will be explained.

Examples of alkali metal compounds used in the surface treatment oil of the present invention include sodium (Na) and potassium (K) compounds, the two compounds are preferably being used in combination.

A preferred sodium compound is a sodium sulfonate represented by $[RSO_3]Na$, but is not particularly limited thereto. A preferred potassium compound is a potassium carboxylate represented by $C_7H_{15}COOK$, but is not particularly limited thereto.

The Na compounds are firmly adsorbed to the surface of a wire to form a rust preventive film, thereby acting to prevent formation of rust on the wire surface. The K compounds play a roll in lowering ionization voltage and further in arc stabilization.

Examples of alkaline earth metal compounds used in the surface treatment oil of the present invention include, but are not especially limited to, barium (Ba), calcium (Ca) and magnesium (Mg) compounds. A preferred alkaline earth metal compound is a sulfonate represented by $[RSO_3]_n M^{n+}$.

Since the alkaline earth metal compounds possess polar functional groups, they are easily adsorbed to the surface of a metal and thus they function to provide a physicochemical correlation between the metal surface and the polar rust preventive additives.

Further, examples of Zn compounds include, but are not particularly limited to, a zinc phosphate represented by $RO_4[P_2S_4]Zn$. Zn compounds form a protective film on the surface of a welding wire, thereby serving to prevent the wire from being worn.

In terms of better physical properties, it is most preferred that the Na compound and K compound as the alkali metal compounds and/or the alkaline earth metal compound and Zn compound are used in combination.

In addition to the metal compounds, the surface treatment oil of the present invention further comprises a hydrocarbon compound. It is preferred that the hydrocarbon compound contains at least two functional groups selected from the group consisting of ester, carboxylic acid, alkane and sulfonic acid groups.

Since the hydrocarbon compound containing polar functional groups is adsorbed to the surface of a metal or wire, the surface energy is remarkably reduced, providing a lower coefficient of friction between metals. Accordingly, the hydrocarbon compound acts to improve the wire feedability of the wire during welding.

The polar functional group-containing hydrocarbon compound is at least one or more material selected from the group consisting of wool fats, wool waxes, lanolins, stearic acid, oleic acid, dimer acids, adipic acid, dicarboxylic acids esters, polyol esters, complex esters, phosphate esters, slack waxes, scale waxes, semi-refined paraffin waxes and micro crystalline waxes.

The surface treatment oil itself can be applied to the surface of a wire without the use of any lubricant. This application of the surface treatment oil is carried out by a process using an oil coating process with felt, immersion oil coating process or electrostatic oil coating process, but is not particularly limited to these processes.

The surface treatment oil is preferably applied to a non-plated(Cu-free) or Cu-plated welding wire so as to be present in an amount of 0.03~0.60g per kg of wire in terms of excellent rust resistance, wear resistance, arc stability and wire feedability of the wire.

Meanwhile, the surface treatment oil is preferably applied to a flux-cored welding wire so as to be present in an amount of 0.01~1.00g per kg of wire in terms of excellent rust resistance, wear resistance, blowhole preventive property and wire feedability of the wire.

The arc stability of the flux-cored wire is more dependent on an arc stabilizer present in a flux filled in a metal sheath than the surface treatment oil of the present invention. Accordingly, the amount of the surface treatment oil applied is determined considering blowhole preventive property rather than arc stability.

The present invention will now be described in more detail with reference to the following examples. However, these examples are not to be construed as limiting the scope of the invention.

<Example 1>

Application of surface treatment oil

Welding wires shown in Table 1 below were produced.

Table 1

| Kind of wires | Specification | | Production process |
|---|---|---|---|
| | AWS | JIS | |
| Solid wire (Non-plated/ Plated) | ER70S-3 | YGW 14 | Non-plated wire |
| | ER70S-3 | YGW 16 | 1) Removal of oxide scale -> (Treatment of phosphate film) -> Wire drawing -> Application of surface treatment oil, or |
| | ER70S-6 | YGW 12 | 2) Removal of oxide scale -> (Treatment of phosphate film) -> Wire drawing-(Heat treatment) -> (Degreasing) -> Wire drawing -> Application of surface treatment oil |
| | ER70S-G | YGW 11 | Plated wire |
| | ER70S-G | YGW 15 | Removal of oxide scale -> (Treatment of phosphate film) -> Wire drawing -> (Heat treatment) |
| | ER70S-G | YGW 18 | -> (Degreasing) -> Plating -> Wire drawing |
| | ER70S-G | YGW 21 | -> Application of surface treatment oil |
| | | | * The bracketed steps can be omitted. |

Table continued

| Kind of wires | Specification | | Production process |
|---|---|---|---|
| | AWS | JIS | |
| Flux-cored wire (Non-plated) | E71T-1 | YFW-C50DR | 1) Sheath degreasing -> Forming [Flux feeding] -> Wire drawing -> Application of surface treatment oil, or |
| | E70T-1 | YFW-C50DM | 2) Sheath degreasing -> Forming [Flux feeding] -> Wire drawing -> Baking -> Application of surface treatment oil |
| | E81T1-K2 | YFL-C506R | |
| | E81T1-K2M | YFL-C506R | |

Then, surface treatment oils having the compositions indicated in Table 6 below were applied to each of the wires. Effects according to the compositions of the surface treatment oils were evaluated. For comparison, the results are shown in the same table. Incidentally, the application of the surface treatment oils was carried out using a felt.

On the other hand, the rust resistance, wear resistance, arc stability, wire feedability and blowhole preventive property of the surface-treated wires were evaluated in the following procedures.

1) Rust resistance: The formation of rust was observed after 60 minutes under the salt-water spray testing conditions shown in Table 2 below. When rust was observed, the rust resistance was judged as "X". If no rust was observed, the rust resistance was judged as "O". At this time, the diameter of used wires was 1.2Φ.

The salt-water spray conditions are shown in Table 2 below.

Table 2

| Salt-water spray conditions | |
|---|---|
| - Chamber Temp.: 35°C | - Tank Temp.: 50°C |
| - Salt-water Concentration: 5% NaCl | - Salt-water spray pressure: 0.15 Mpa |

2) Wear resistance: After setting up a feeder mounted with a new 5m-length cable(300φ) having a two-turn shape, the said wire was drawn out from the contact tip of the said cable for 10 minutes without any welding and then the generation of scratches was observed.

When scratches were observed on the wire surface, the wear resistance was judged as "X". When no scratch was observed on the wire surface, the wear resistance was judged as "O". At this time, the diameter of used wires was 1.2Φ.

3) Arc stability: After welding was performed using a 3m long straight feed cable by bead-on-plate welding under the welding conditions shown in Table 3 below, the generation of spatters was observed. When the weight of 1mm or larger spatters exceeded 0.2g or the total weight of spatters exceeded 2g, the arc stability was judged as "X". At this time, the diameter of used wires was 1.2Φ. Welding conditions for arc stability test are shown in Table 3 below.

Table 3

| Welding conditions for arc stability test | |
|---|---|
| - Current (A): 210 | - Voltage (V): 23 |
| - Welding speed (CPM): 100 | - Welding time (sec.): 15 |
| - Gas: 100% $CO_2$ | - Gas flow rate (l/min): 20 |

4) Wire feedability: In condition of a 5m long two-turn feed cable (300Φ), zigzag weaving welding was performed in bead-on-plate. When the wire feeding was incomplete and thus welding was impossible for less than 100 seconds, the wire feedability was judged as "X". When continuous welding was possible for 100 seconds or more, the wire feedability was judged as "O". At this time, the diameter of used wires was 1.2Φ.

Welding conditions for wire feedability test are shown in Table 4 below.

Table 4

| Welding conditions for wire feedability test | |
|---|---|
| - Current (A): 420 | - Voltage (V): 44 |
| - Welding speed (CPM): 50 | - Welding time (sec.): - |
| - Gas: 100% $CO_2$ | - Gas flow rate (l/min): 20 |

5) Blowhole preventive property: After welding was performed using a 3m long straight feed cable by bead-on-plate welding under the welding conditions shown in Table 5 below, the generation of blowholes was observed. When blowholes (air pores) were generated on the bead surface, the blowhole preventive property was judged as "X". When no blowhole was generated on the bead surface, the blowhole preventive property was judged as "O". At this time, the diameter of used wires was 1.2Φ.

Welding conditions for blowhole preventive property test are shown in Table 5 below.

Table 5

| Welding conditions for blowhole preventive property test | |
|---|---|
| - Current (A): 280 | - Voltage (V): 32 |
| - Welding speed - (CPM): 40 | Welding time (sec.): 45 |
| - Gas: 100% $CO_2$ | - Gas flow rate (l/min): 20 |

Table 6a

| Example No. | | Oil treatment (Y/N) | Metal compounds | | | Hydrocarbon compound | | | | Effects | | | |
|---|---|---|---|---|---|---|---|---|---|---|---|---|---|
| | | | Na cpd | Zn cpd | K cpd | Ester group | Carboxylic acid group | Alkane group | Sulfonic acid goup | Rust resistance | Wear resistance | Arc stability | Wire feedability |
| Comp. Exam. | 1 | N | X | X | X | X | X | X | X | X | X | X | X |
| | 2 | Y | X | X | O | O | X | X | X | X | X | O | X |
| | 3 | Y | X | X | O | X | O | X | X | X | X | O | X |
| | 4 | Y | X | X | O | X | X | O | X | X | X | O | X |
| | 5 | Y | X | X | O | X | X | X | O | X | X | O | X |
| | 6 | Y | X | O | X | O | X | X | X | X | O | X | X |
| | 7 | Y | X | O | X | X | O | X | X | X | O | X | X |
| | 8 | Y | X | O | X | X | X | O | X | X | O | X | X |
| | 9 | Y | X | O | X | X | X | X | O | X | O | X | X |
| | 10 | Y | O | X | X | O | X | X | X | O | X | X | X |
| | 11 | Y | O | X | X | X | O | X | X | O | X | X | X |
| | 12 | Y | O | X | X | X | X | O | X | O | X | X | X |
| | 13 | Y | O | X | X | X | X | X | O | O | X | X | X |
| | 14 | Y | O | O | X | O | X | X | X | O | O | X | X |
| | 15 | Y | O | O | X | X | O | X | X | O | O | X | X |
| | 16 | Y | O | O | X | X | X | O | X | O | O | X | X |
| | 17 | Y | O | O | X | X | X | X | O | O | O | X | X |
| | 18 | Y | O | X | O | O | X | X | X | O | X | O | X |
| | 19 | Y | O | X | O | X | O | X | X | O | X | O | X |
| | 20 | Y | O | X | O | X | X | O | X | O | X | O | X |

Table continued

| Example No. | | Oil treatment (Y/N) | Metal compounds | | | Hydrocarbon compound | | | | Effects | | | |
|---|---|---|---|---|---|---|---|---|---|---|---|---|---|
| | | | Na cpd | Zn cpd | K cpd | Ester group | Carboxylic acid group | Alkan e group | Sulfonic acid goup | Rust resistance | Wear resistance | Arc stability | Wire feedability |
| | 21 | Y | O | X | O | X | X | X | O | O | X | O | X |
| | 22 | Y | X | O | O | O | X | X | X | X | O | O | X |
| | 23 | Y | X | O | O | X | O | X | X | X | O | O | X |
| | 24 | Y | X | O | O | X | X | O | X | X | O | O | X |
| | 25 | Y | X | O | O | X | X | X | O | X | O | O | X |
| | 26 | Y | O | O | O | O | X | X | X | O | O | O | X |
| | 27 | Y | O | O | O | X | O | X | X | O | O | O | X |
| | 28 | Y | O | O | O | X | X | O | X | O | O | O | X |
| | 29 | Y | O | O | O | X | X | X | O | O | O | O | X |
| | 30 | Y | X | X | O | O | O | X | X | X | X | O | O |
| | 31 | Y | X | O | X | O | O | X | X | X | O | X | O |
| | 32 | Y | O | X | X | O | O | X | X | O | X | X | O |
| | 33 | Y | O | O | X | O | O | X | X | O | O | X | O |
| | 34 | Y | O | X | O | O | O | X | X | O | X | O | O |
| | 35 | Y | X | O | O | O | O | X | X | X | O | O | O |
| | 36 | Y | X | X | O | O | X | O | X | X | X | O | O |
| | 37 | Y | X | O | X | O | X | O | X | X | O | X | O |
| | 38 | Y | O | X | X | O | X | O | X | O | X | X | O |
| | 39 | Y | O | O | X | O | X | O | X | O | O | X | O |
| | 40 | Y | O | X | O | O | X | O | X | O | X | O | O |
| | 41 | Y | X | O | O | O | X | O | X | X | O | O | O |

Table continued

| Example No. | | Oil treatment (Y/N) | Metal compounds | | | Hydrocarbon compound | | | | Effects | | | |
|---|---|---|---|---|---|---|---|---|---|---|---|---|---|
| | | | Na cpd | Zn cpd | K cpd | Ester group | Carboxylic acid group | Alkan e group | Sulfonic acid goup | Rust resistance | Wear resistance | Arc stability | Wire feedability |
| | 42 | Y | X | X | O | O | X | X | O | X | X | O | O |
| | 43 | Y | X | O | X | O | X | X | O | X | O | X | O |
| | 44 | Y | O | X | X | O | X | X | O | O | X | X | O |

EP 1 611 990 A1

Table 6b

| Example No. | | Oil treatment (Y/N) | Metal compounds | | | Hydrocarbon compound | | | | Effects | | | |
|---|---|---|---|---|---|---|---|---|---|---|---|---|---|
| | | | Na cpd | Zn cpd | K cpd | Ester group | Carboxylic acid group | Alkane group | Sulfonic acid group | Rust resistance | Wear resistance | Arc stability | Wire feedability |
| Comp. Exam. | 45 | Y | O | O | X | O | X | X | O | O | O | X | O |
| | 46 | Y | O | X | O | O | X | X | O | O | X | O | O |
| | 47 | Y | X | O | O | O | X | X | O | X | O | O | O |
| | 48 | Y | X | X | O | X | O | O | X | X | X | O | O |
| | 49 | Y | X | O | X | X | O | O | X | X | O | X | O |
| | 50 | Y | O | X | X | X | O | O | X | O | X | X | O |
| | 51 | Y | O | O | X | X | O | O | X | O | O | X | O |
| | 52 | Y | O | X | O | X | O | O | X | O | X | O | O |
| | 53 | Y | X | O | O | X | O | O | X | X | O | O | O |
| | 54 | Y | X | X | O | X | O | X | O | X | X | O | O |
| | 55 | Y | X | O | X | X | O | X | O | X | O | X | O |
| | 56 | Y | O | X | X | X | O | X | O | O | X | X | O |
| | 57 | Y | O | O | X | X | O | X | O | O | O | X | O |
| | 58 | Y | O | X | O | X | O | X | O | O | X | O | O |
| | 59 | Y | X | O | O | X | O | X | O | X | O | O | O |
| | 60 | Y | X | X | O | X | X | O | O | X | X | O | O |
| | 61 | Y | X | O | X | X | X | O | O | X | O | X | O |
| | 62 | Y | O | X | X | X | X | O | O | O | X | X | O |
| | 63 | Y | O | O | X | X | X | O | O | O | O | X | O |
| | 64 | Y | O | X | O | X | X | O | O | O | X | O | O |

Table continued

| Example No. | | Oil treatment (Y/N) | Metal compounds | | | Hydrocarbon compound | | | | Effects | | | |
|---|---|---|---|---|---|---|---|---|---|---|---|---|---|
| | | | Na cpd | Zn cpd | K cpd | Ester group | Carboxylic acid group | Alkane group | Sulfonic acid group | Rust resistance | Wear resistance | Arc stability | Wire feedability |
| | 65 | Y | X | O | O | X | X | O | O | X | O | O | O |

Table 6c

| Example No. | | Oil treatment (Y/N) | Metal compounds | | | Hydrocarbon compound | | | | Effects | | | |
|---|---|---|---|---|---|---|---|---|---|---|---|---|---|
| | | | Na cpd | Zn cpd | K cpd | Ester goup | Carboxyl ic acid goup | Alkan e goup | Sulfonic acid goup | Rust resistance | Wear resistance | Arc stability | Wire feedability |
| Exam. | 66 | Y | O | O | O | O | O | X | X | O | O | O | O |
| | 67 | Y | O | O | O | O | X | O | X | O | O | O | O |
| | 68 | Y | O | O | O | O | X | X | O | O | O | O | O |
| | 69 | Y | O | O | O | X | O | O | X | O | O | O | O |
| | 70 | Y | O | O | O | X | O | X | O | O | O | O | O |
| | 71 | Y | O | O | O | X | X | O | O | O | O | O | O |
| | 72 | Y | O | O | O | O | O | O | X | O | O | O | O |
| | 73 | Y | O | O | O | O | O | X | O | O | O | O | O |
| | 74 | Y | O | O | O | O | X | O | O | O | O | O | O |
| | 75 | Y | O | O | O | X | O | O | O | O | O | O | O |
| | 76 | Y | O | O | O | O | O | O | O | O | O | O | O |
| * Note: In the above tables, "Comp. Exam." and "cpd" are abbreviations for "Comparative Example" and "compound", respectively. | | | | | | | | | | | | | |

As is evident from Tables 6a to 6c, the wire of Comparative Example 1 treated with no surface treatment oil had poor rust resistance, wear resistance, arc stability and wire feedability.

The wires of Comparative Examples 2 to 5 had good arc stability, but poor rust resistance and wear resistance. Further, the wires had poor wire feedability due to the presence of only one functional group in the hydrocarbon compound.

The wires of Comparative Examples 6 to 9 had good wear resistance due to the presence of a Zn compound, but poor rust resistance and arc stability because the hydrocarbon compound contains only one functional group.

The wires of Comparative Examples 10 to 13 had good rust resistance due to the presence of a Na compound, but poor wear resistance and arc stability. Further, the wires had poor wire feedability due to the presence of only one functional group in the hydrocarbon compound.

The wires of Comparative Examples 14 to 17 had good rust resistance and wear resistance due to the presence of a Na compound and a Zn compound, but poor arc stability. Further, the wires had poor wire feedability due to the presence of only one functional group in the hydrocarbon compound.

The wires of Comparative Examples 18 to 21 had good rust resistance and arc stability due to the presence of a Na compound and a K compound, but poor wear resistance. Further, the wires had poor wire feedability due to the presence of only one functional group in the hydrocarbon compound.

The wires of Comparative Examples 22 to 25 had good wear resistance and arc stability due to the presence of a Zn compound and a K compound, but poor rust resistance. Further, the wires had poor wire feedability due to the presence of only one functional group in the hydrocarbon compound.

The wires of Comparative Examples 26 to 29 had good rust resistance, wear resistance and arc stability due to the presence of a Na compound, a Zn compound and a K compound. However, the wires had poor wire feedability because the hydrocarbon compound contains only one functional group.

The wires of Comparative Examples 30 to 65 had good wire feedability due to the presence of two or more functional group of the hydrocarbon compound, but not all of rust resistance, wear resistance and arc stability of them are good due to the presence of only one or two metal compounds.

In contrast, since the wires of Examples 66 to 76 contain a Na compound, a Zn compound and a K compound, they had good rust resistance, wear resistance and arc stability. In addition, the wires had good wire feedability due to the presence of at least two functional groups in the hydrocarbon compound.

In conclusion, the results from Tables 6a to 6c indicate that preferred surface treatment oils have a composition comprising at least one alkaline metal compound and/or an alkaline earth metal compound, a Zn compound, and a hydrocarbon compound (containing at least two functional groups selected from the group consisting of ester, carboxylic acid, alkane and sulfonic acid groups).

<Example 2>

Comparison of effects according to varying amounts of applied surface treatment oils

1) non-plated(Cu-free)/Cu-plated solid wires

The surface treatment oil of the present invention (Example 66 in Table 6c) was applied to a wire, and then the amount of the surface treatment oil present on the wire surface was measured in accordance with the following procedure.

    1. The wire was cut into sample wires having a length of 6~8cm and a weight of about 50~80g.
    2. 1,000ml of $CCl_4$ as a solvent was placed in a beaker.
    3. The sample wires were placed on a 1g/10000 balance and then the weight ($W_b$) of the sample wires before degreasing was measured.
    4. The wires were put in the beaker, and the surface treatment oil was degreased from the wires for 10 minutes with stirring two or three times.
    5. The degreased sample wires were placed in an oven, dried for 10 minutes, and allowed to cool to room temperature in a desiccator.
    6. The dried sample wires were placed on a 1g/10000 balance and the weight ($W_a$) of the wires after degreasing was measured.
    7. Based on the measured weight values $W_b$ and $W_a$, the amount of the surface treatment oil applied was calculated according to the following equation.

Equation 1

Amount of surface treatment oil applied (g/w·kg)

$$= \{(W_b - W_a)/W_a\} \times 1000$$

Effects according to varying amounts of the applied surface treatment oils were evaluated. For comparison, the results are summarized in Table 7 below.

Table 7

| Example No. | | Amount of | Effects | | | |
|---|---|---|---|---|---|---|
| | | surface treatment oil (g/w·kg) | Rust resistance | Wear resistance | Arc stability | Wire feedability |
| Comparative Examples | 1 | 0.01 | X | X | O | X |
| | 2 | 0.02 | X | X | O | O |
| | 3 | 0.62 | O | O | X | X |
| | 4 | 0.65 | O | O | X | X |
| | 5 | 0.70 | O | O | X | X |
| Examples | 6 | 0.03 | O | O | O | O |
| | 7 | 0.04 | O | O | O | O |
| | 8 | 0.05 | O | O | O | O |
| | 9 | 0.07 | O | O | O | O |
| | 10 | 0.09 | O | O | O | O |
| | 11 | 0.15 | O | O | O | O |
| | 12 | 0.25 | O | O | O | O |
| | 13 | 0.35 | O | O | O | O |
| | 14 | 0.50 | O | O | O | O |
| | 15 | 0.60 | O | O | O | O |

As can be seen from Table 7, the wire of Comparative Example 1 had poor rust resistance because the amount of the surface treatment oil applied was small. Further, since the frictional force between a spring liner in a feed cable and the wire was increased, the wear resistance and wire feedability were poor.

The wire of Comparative Example 2 had poor rust resistance because the amount of the surface treatment oil applied was small. Further, since the frictional force between a spring liner in a feed cable and the wire was increased, the wear resistance was poor.

Since an excess of the surface treatment oils were applied to the wires of Comparative Examples 3 to 5, slipping of the wires occurred upon welding, and hence wire feeding was not smooth and arc was unstable.

In contrast, since the surface treatment oils within the range defined in the present invention were applied to the wires of Examples 6 to 15, all effects, i.e. rust resistance, wear resistance, arc stability and wire feedability, were good.

From these results, it could be confirmed that the surface treatment oils are preferably applied to the non-plated(Cu-free)/Cu-plated solid wires in an amount of 0.03~0.60g per kg of wires.

2) Flux-cored wires

The surface treatment oil of the present invention (Example 71 in Table 6c) was applied to a wire, and then the amount of the surface treatment oil present on the wire surface was measured in accordance with the following procedure.

1. The wire was cut into sample wires having a length of 3~4cm and a weight of about 10~20g.
2. 50ml of $CCl_4$ as a solvent was placed in a beaker.
3. The sample wires were placed on a 1g/10000 balance and then the weight ($W_b$) of the sample wires before degreasing was measured.
4. The wires were put in the beaker, and were sufficiently stirred for 5~10 minutes.
5. The obtained solution was passed through a 50mm glass microfiber filter (GF/C, Whatman) as a filter paper.
6. The oil amount in the solution filtered through the filter paper was measured using an oil content meter.

The specification and operative conditions of the oil content meter are listed in Table 8 below.

Table 8

| Oil content meter | |
|---|---|
| - Model: OIL-20 | Manufacturer: Nippon Instruments Corporation |
| Operational conditions | |
| - Measurement Temp.: Room Temperature<br>- Solvent: $CCl_4$<br>- Sample amount: 10~20g (3~4cm) | - Measurement time: 20~30 sec.<br>- Solvent amount: 50ml |

Effects according to varying amounts of the applied surface treatment oils were evaluated. For comparison, the results are summarized in Table 9 below.

Table 9

| Example No. | | Amount of surface treatment oil (g/w · kg) | Effects | | | |
|---|---|---|---|---|---|---|
| | | | Rust resistance | Wear resistance | Blowhole preventive property | Wire feedability |
| Comparative Examples | 1 | 0.005 | X | X | O | X |
| | 2 | 0.007 | X | X | O | X |
| | 3 | 0.009 | O | X | O | O |
| | 4 | 1.02 | O | O | X | O |
| | 5 | 1.05 | O | O | X | O |
| | 6 | 1.50 | O | O | X | X |
| | 7 | 2.04 | O | O | X | X |
| Examples | 8 | 0.01 | O | O | O | O |
| | 9 | 0.25 | O | O | O | O |
| | 10 | 0.37 | O | O | O | O |
| | 11 | 0.52 | O | O | O | O |
| | 12 | 0.65 | O | O | O | O |
| | 13 | 0.80 | O | O | O | O |
| | 14 | 0.92 | O | O | O | O |
| | 15 | 1.00 | O | O | O | O |

As shown in Table 9, the wires of Comparative Examples 1 and 2 had poor rust resistance and wear resistance because the amount of the surface treatment oils applied was small. Further, since the frictional force between a spring liner in a feed cable and each of the wires was increased, the wire feedability was poor.
The amount of the surface treatment oil applied to the wire of Comparative Example 3 was larger than that applied to the wires of Comparative Examples 1 and 2, but did not reach the amount of the surface treatment oils applied to the wires of Examples 8~15. As a result, the wire of Comparative Example 3 had poor wear resistance.

The amount of the surface treatment oils applied to the wires of Comparative Examples 4 and 5 was larger than that of the surface treatment oils applied to the wires of Examples 8~15. As a result, blowholes were generated on the bead surface upon welding.

Likewise, the amount of the surface treatment oils applied to the wires of Comparative Examples 6 and 7 was much larger than that of the surface treatment oils applied to the wires of Examples 8~15. As a result, blowholes were generated on the bead surface upon welding, and further slipping of the wires occurred in a feeding machine, causing non-uniform wire feeding.

In contrast, since the surface treatment oils within the range defined in the present invention were applied to the wires of Examples 8 to 15, all effects, i.e. rust resistance, wear resistance, blowhole resistance and wire feedability, were good.

From these results, it could be confirmed that the surface treatment oils are preferably applied to the flux-cored wires in an amount of 0.01~1.00g per kg of wire.

As apparent from the above description, the welding wires on which the surface treatment oil of the present invention is applied have superior rust resistance, and are excellent in wear resistance, arc stability and wire feedability upon welding. Moreover, the flux-cored wires on which the surface treatment oil of the present invention is applied have superior rust resistance, wear resistance, blowhole preventive property and wire feedability.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. A surface treatment agent for treating the surface of a welding wire, comprising:

   at least one alkali metal compound and/or an alkaline earth metal compound;
   a Zn compound; and
   a hydrocarbon compound,

   wherein the hydrocarbon compound contains at least two functional groups selected from the group consisting of ester, carboxylic acid, alkane and sulfonic acid groups.

2. The surface treatment oil according to claim 1, wherein the hydrocarbon compound is at least one or more material selected from the group consisting of wool fats, wool waxes, lanolins, stearic acid, oleic acid, dimer acids, adipic acid, dicarboxylic acids esters, polyol esters, complex esters, phosphate esters, slack waxes, scale waxes, semi-refined paraffin waxes and microcrystalline waxes.

3. A non-plated(Cu-free) welding wire surface treated with the surface treatment oil according to claim 1 or 2 wherein the surface treatment oil is applied to the wire so as to be present in an amount of 0.03~0.60g per kg of wire.

4. A Cu-plated welding wire surface treated with the surface treatment oil according to claim 1 or 2 wherein the surface treatment oil is applied to the wire so as to be present in an amount of 0.03~0.60g per kg of wire.

5. A flux-cored welding wire surface treated with the surface treatment oil according to claim 1 or 2 wherein the surface treatment oil is applied to the wire so as to be present in an amount of 0.01~1.00g per kg of wire.

**European Patent Office**

**EUROPEAN SEARCH REPORT**

Application Number

EP 04 02 3956

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 916 444 A (KABUSHIKI KAISHA KOBE SEIKO SHO) 19 May 1999 (1999-05-19) * claims; examples * ----- | 1-5 | B23K35/04 B23K35/40 |
| A | EP 1 285 717 A (KABUSHIKI KAISHA KOBE SEIKO SHO) 26 February 2003 (2003-02-26) * claims * ----- | 1-5 | |
| A | US 2 818 496 A (LUDWIG HOWARD C) 31 December 1957 (1957-12-31) * the whole document * ----- | 1-5 | |
| A | PATENT ABSTRACTS OF JAPAN vol. 2003, no. 11, 5 November 2003 (2003-11-05) & JP 2003 191092 A (KOBE STEEL LTD), 8 July 2003 (2003-07-08) * abstract * ----- | 1-5 | |

TECHNICAL FIELDS SEARCHED (Int.Cl.7)

B23K

The present search report has been drawn up for all claims

| Place of search | Date of completion of the search | Examiner |
|---|---|---|
| The Hague | 7 October 2005 | Mollet, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 02 3956

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2005

| Patent document cited in search report | | Publication date | Patent family member(s) | | Publication date |
|---|---|---|---|---|---|
| EP 0916444 | A | 19-05-1999 | AU | 710977 B2 | 30-09-1999 |
| | | | AU | 9143898 A | 03-06-1999 |
| | | | CN | 1217249 A | 26-05-1999 |
| | | | DE | 69816756 D1 | 04-09-2003 |
| | | | DE | 69816756 T2 | 22-04-2004 |
| | | | TW | 418148 B | 11-01-2001 |
| | | | US | 6337144 B1 | 08-01-2002 |
| EP 1285717 | A | 26-02-2003 | CN | 1453091 A | 05-11-2003 |
| | | | TW | 590839 B | 11-06-2004 |
| | | | US | 2003085211 A1 | 08-05-2003 |
| US 2818496 | A | 31-12-1957 | NONE | | |
| JP 2003191092 | A | 08-07-2003 | NONE | | |

EPO FORM P0459

For more details about this annex : see Official Journal of the European Patent Office, No. 12/82